# EUROPÄISCHE PATENTSCHRIFT

(11) **EP 2 687 391 B1**
(45) Veröffentlichungstag und Bekanntmachung des Hinweises auf die Patenterteilung: **07.08.2019**
(21) Anmeldenummer: 13002986.1
(22) Anmeldetag: 11.06.2013
(51) Int. Cl.: B60G 17/056, B60G 17/052

(54) **Luftfederventil**
Pneumatic valve
Soupape de suspension pneumatique

(30) Priorität: 19.07.2012 DE 102012014349
(43) Veröffentlichungstag der Anmeldung: 22.01.2014
(73) Patentinhaber: WABCO GmbH, 30453 Hannover (DE)
(72) Erfinder: Björn, Bleckmann, 30163 Hannover (DE); Axel, Stender, 31787 Hameln (DE)

(56) Entgegenhaltungen:
- DE-A1- 3 716 436
- DE-A1-102007 057 947
- DE-C1- 4 329 432
- DE-C1- 4 416 280
- DE-C1- 19 607 619

## Beschreibung

Die Erfindung betrifft ein Luftfederventil für die gesteuerte Zufuhr von Druckluft zu Luftfedern, gemäß dem Oberbegriff des Anspruchs 1. Daneben betrifft die Erfindung auch ein pneumatisches Federungssystem und ein Fahrzeug mit pneumatischem Federungssystem.

Luftfederventile in Fahrzeugen mit pneumatischer Federung steuern die Zufuhr von Druckluft aus einem Vorrat zu Luftfedern des Fahrzeugs. Die Luftfedern werden auch als Federbälge bezeichnet bzw. sind als Federbälge ausgeführt. Durch Änderung des Luftdrucks in den Federbälgen können die Federcharakteristik und/oder die Fahrzeughöhe beeinflusst werden. Mit Luftfederventilen ist ein automatisches Nachführen des Luftdrucks in den Federbälgen zur Anpassung an zunehmende oder abnehmende Beladung möglich. Ohne Regelung würde das Fahrzeug beim Beladen absacken, da die Federbälge die erhöhte Last nicht tragen können. Durch das Luftfederventil wird den Federbälgen stets so viel Druckluft zugeführt, dass die Fahrzeughöhe beim Beladen konstant bleibt. Umgekehrt wird durch die Funktion des Luftfederventils beim Entladen des Fahrzeugs ein Anheben desselben verhindert.

Dem Luftfederventil ist ein manuell betätigbares Hebe-/Senkventil zugeordnet, mit dem eine Bedienungsperson den Druck in den Federbälgen erhöhen oder verringern und so die Fahrzeughöhe verändern kann.

Das Luftfederventil kann mit einem Höhenbegrenzungsmodul versehen sein. Dieses enthält ein zusätzliches Ventil, welches ab einer definierten oberen Fahrzeughöhe in eine Sperrfunktion bzw. Entlüftungsfunktion übergeht, eine Leitung vom Vorrat zum Hebe-/Senkventil absperrt oder die Leitung entlüftet und so ein weiteres Anheben durch die Bedienungsperson verhindert.

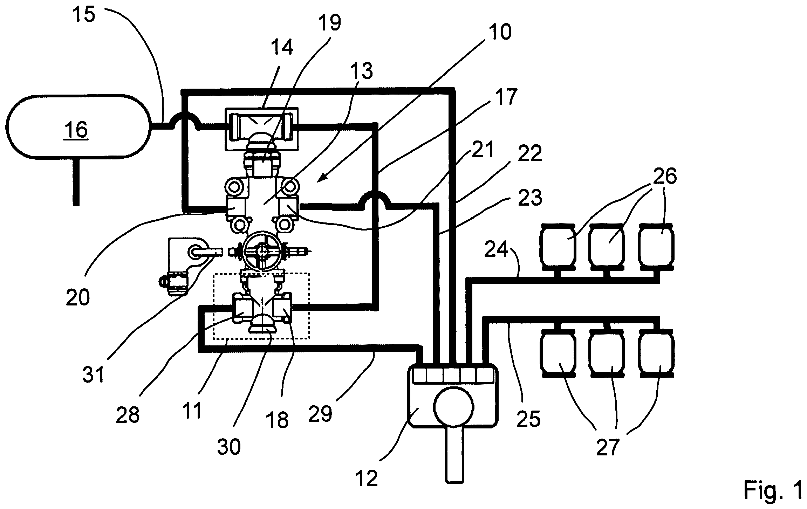

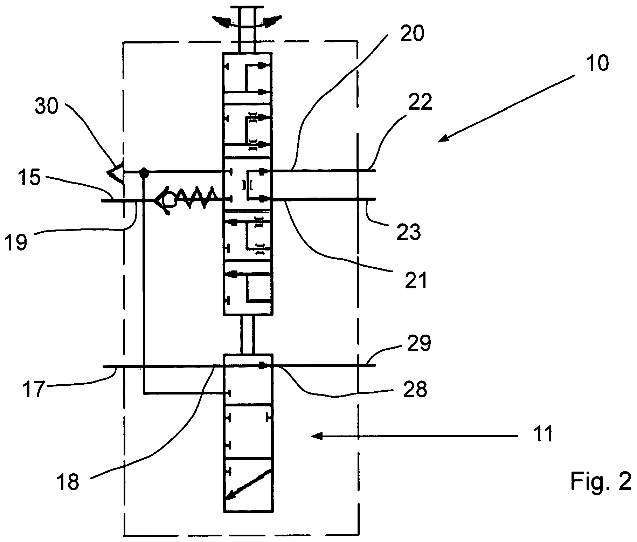

Die Fig. 1 und 2 beziehen sich auf ein zum Stand der Technik zählendes Luftfederventil 10 mit integriertem Höhenbegrenzungsmodul 11 und zugeordnetem Hebe-/Senkventil. Letzteres wird nachfolgend nur als Liftventil 12 bezeichnet.

Wie in der Draufsicht auf das Luftfederventil 10 gemäß Fig. 1 erkennbar, ist an einem oberen Ende eines Ventilgehäuses 13 ein T-Stück 14 angeschlossen. Dieses wird über eine Leitung 15 aus einem Druckluftvorrat 16 gespeist und verteilt die Druckluft einerseits über eine Leitung 17 an einen Anschluss 18 am Höhenbegrenzungsmodul 11 und andererseits über einen Anschluss 19 unmittelbar in das Ventilgehäuse 13.

Je nach Stellung eines im Ventilgehäuse 13 angeordneten, nicht gezeigten Ventilkörpers wird die Druckluft über Anschlüsse 20, 21 und Leitungen 22, 23 zum Liftventil 12 und von dort über Leitungen 24, 25 zu Federbälgen 26, 27 eines Fahrzeugs geleitet oder abgesperrt.

Im Höhenbegrenzungsmodul 11 ist ein nicht gezeigter Fortsatz für den Ventilkörper vorgesehen, welcher zum Ventilkörper korrespondierende Bewegungen ausführt und dabei den Anschluss 18 je nach Ventilkörperstellung mit einem zweiten Anschluss 28 am Höhenbegrenzungsmodul 11 verbindet. Vom Anschluss 28 führt eine Leitung 29 über das Liftventil 12 mittelbar zu den Federbälgen 26, 27.

Je nach Stellung des Ventilkörpers kann sich auch eine Entlüftung ergeben, etwa über eine Entlüftungsöffnung 30 am Höhenbegrenzungsmodul 11. Die Entlüftung bewirkt, dass an den Anschlüssen 20, 21 anliegende Druckluft abströmt und der Druck in den Federbälgen 26, 27 nachlässt. Die Stellung des Ventilkörpers wird gesteuert durch Schwenken eines außen am Ventilgehäuse 13 gelagerten Hebels 31. Dieser ist einseitig mit einem Teil des Fahrzeugs verbunden, welcher sich relativ zum Luftfederventil 10 je nach Beladung und Fahrdynamik auf- und abbewegen kann.

Das Luftfederventil 10 ist so aufgebaut, dass je nach Anforderung eine Ausführung mit oder ohne Höhenbegrenzungsmodul 11 gebaut werden kann. In der in Fig. 1 gezeigten Version ist das Höhenbegrenzungsmodul 11 dem T-Stück 14 gegenüberliegend an das Ventilgehäuse 13 angeflanscht. In einer Ausführung ohne Höhenbegrenzungsmodul 11 kann anstelle des T-Stücks 14 ein L-Stück vorgesehen sein, da die Leitung 17 entfällt.

Fig. 2 zeigt das Schaltzeichen des Luftfederventils 10 gemäß Stand der Technik mit Höhenbegrenzungsmodul 11. Gezeigt ist eine mittlere Position des Ventilkörpers, bei der der Druck in den Leitungen konstant gehalten wird und keine Druckluft zu- oder abströmt. Je nach Position des Hebels 31 bewegt sich der Ventilkörper in eine der weiteren gezeigten Positionen. Dabei kann die Druckluft zweistufig in die Leitungen 22, 23 strömen bzw. zweistufig entlüften. Zugleich ist die Belüftung begrenzt durch die Funktion des Höhenbegrenzungsmoduls 11.

Je nach Position des Hebels 31 ist auch das Höhenbegrenzungsmodul 11 wirksam und sperrt die Leitung 29 oder entlüftet diese sogar. In Fig. 2 gezeigt ist eine Stellung des Höhenbegrenzungsmoduls 11, in der in der Leitung 29 der volle Druck aus dem Vorrat 16 anliegt. In der Leitung 15 ist ein Rückschlagventil 32 vorgesehen.

Nachteil der gezeigten Ausführung ist der zusätzliche Aufwand für das T-Stück 14. Bei einer Ausführung des Luftfederventils ohne das Höhenbegrenzungsmodul ist anstelle des T-Stücks das bereits genannte L-Stück vorgesehen, sodass sich auch bei dieser Ausführung keine Kostenreduzierung ergibt.

Ein Luftfederventil mit T-Stück und L-Stück ist auch der DE 10 2007 057 947 A1 entnehmbar. Das Ventil wird dort als Niveauregelventil bezeichnet.

DE 44 16 280 C1 offenbart ein Niveauregelventil zum selbsttätigen Konstanthalten der Fahrzeughöhe eines Nutzfahrzeuges mit Luftfederung mit einem federbelasteten Doppelventilkörper und einen Auslaßsitz für den Doppelventilkörper tragenden und abgedichtet verschiebbaren hohlen Ventilstößel, dessen Stellung relativ zum Gehäuse des Niveauregelventils über einen die Fahrzeughöhe abtastenden Verstelltrieb veränderbar ist. Zur Realisierung einer Höhenbegrenzung ist ein mit dem Gehäuse des Niveauregelventils verbindbares Ansatzgehäuse vorgesehen, in dem ein Sperrventil untergebracht ist, das über eine Ventilstange betätigbar ist, die über eine Feder in eine unbetätigte Ruhelage abgestützt ist, in der das dem Ventilstößel zugekehrte Ende der Ventilstange mit einem Freigang zum Ventilstößel oder einem Führungsstück des Verstelltriebes endet. Am Ansatzgehäuse sind Anschlüsse für eine zu einem Wechsellagerventil führende Vorratsleitung vorgesehen, in die das Sperrventil eingeschaltet ist.

Aufgabe der vorliegenden Erfindung ist die Schaffung eines Luftfederventils, welches kostengünstiger herstellbar ist. Vorzugsweise soll das neue Luftfederventil. zugleich in der Ausführung ohne Höhenbegrenzungsmodul nicht aufwendiger sein als in der bekannten Ausführung.

Zur Lösung der Aufgabe weist das erfindungsgemäße Luftfederventil die Merkmale des Anspruchs 1 auf. Bestandteil des Luftfederventils ist ein Ventilgehäuse. Vorgesehen ist ein Anschluss zum Eintritt der Druckluft insbesondere in das Ventilgehäuse. Mit letzterem verbunden ist ein Höhenbegrenzungsmodul, welches mit Anschlüssen zum Eintritt der Druckluft und zum Austritt der Druckluft versehen ist. Außerdem ist am Höhenbegrenzungsmodul ein weiterer Anschluss für Druckluft vorgesehen. Durch den weiteren Anschluss ist es möglich die Funktion des bisher vorgesehenen T-Stücks am oberen Ende des Ventilgehäuses an das andere Ende des Ventilgehäuses zu verlagern, nämlich zum Höhenbegrenzungsmodul. Das Luftfederventil in einer Ausführung ohne Höhenbegrenzungsmodul wird durch die Maßnahme nicht aufwendiger. Außerdem kann das T-Stück eingespart werden.

Erfindungsgemäß ist der weitere Anschluss am Höhenbegrenzungsmodul unmittelbar verbunden mit dem Anschluss am Höhenbegrenzungsmodul zum Eintritt der Druckluft. Es handelt sich um eine interne Verbindung im Höhenbegrenzungsmodul, so dass eine Weiterleitung bis zum Anschluss zum Eintritt der Druckluft in das Ventilgehäuse möglich ist. Dort war bislang das T-Stück angeordnet.

Nach einem weiteren Gedanken der Erfindung ist der Anschluss am Höhenbegrenzungsmodul zum Eintritt der Druckluft an eine zu einem Druckluft-Vorrat führende Leitung anschließbar. Somit erfolgt die Druckluftzufuhr aus dem Vorrat jetzt primär zum Höhenbegrenzungsmodul und nicht mehr primär zum T-Stück an dem dem Höhenbegrenzungsmodul gegenüberliegenden Ende des Ventilgehäuses.

Gegenstand der Erfindung ist auch ein pneumatisches Federungssystem mit mindestens einem erfindungsgemäßen Luftfederventil. Das pneumatische Federungssystem kann Bestandteil eines Fahrzeugs sein, insbesondere eines Kraftfahrzeugs, etwa eines Zugfahrzeugs in einem Lastzug. Das pneumatische Federungssystem kann aber auch Bestandteil eines Anhängerfahrzeugs ohne eigenen Antrieb sein.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: eine Außenansicht (Vorderansicht) eines zum Stand der Technik zählenden Luftfederventils, wie oben bereits erläutert,
- Fig. 2: das Schaltzeichen des zum Stand der Technik zählenden Luftfederventils gemäß Fig. 1,
- Fig. 3: eine Außenansicht (Rückansicht) eines erfindungsgemäßen Luftfederventils mit Luftdruck-Vorrat und Federbälgen,
- Fig. 4: das Schaltzeichen des erfindungsgemäßen Luftfederventils gemäß Fig. 3.

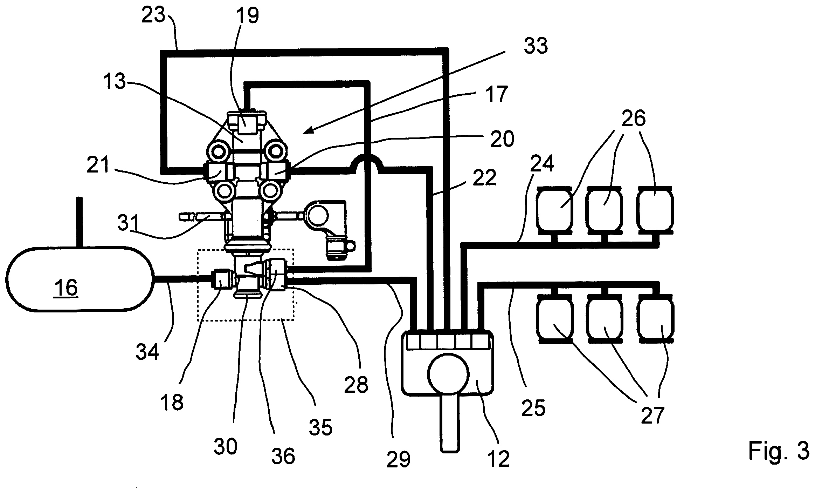

Ausgehend von den oben im Zusammenhang mit dem Stand der Technik erläuterten Fig. 1 und 2 wird Bezug gekommen auf Fig. 3.

Soweit die Darstellungen in den Fig. übereinstimmen, sind gleiche Bezugsziffern angegeben. Aufgrund der neuen Konfiguration ist ein erfindungsgemäßes Luftfederventil in Fig. 3 mit der Ziffer 33 bezeichnet und im Gegensatz zu Fig. 1 in einer Rückansicht abgebildet.

Die Leitung 17 schließt in Fig. 3 unmittelbar an den Anschluss 19 am oberen Ende des Luftfederventils 33 an. Ein T-Stück ist hier nicht vorgesehen. Deshalb ist der Druckluft-Vorrat 16 über eine Leitung 34 mit dem Anschluss 18 eines Höhenbegrenzungsmoduls 35 verbunden.

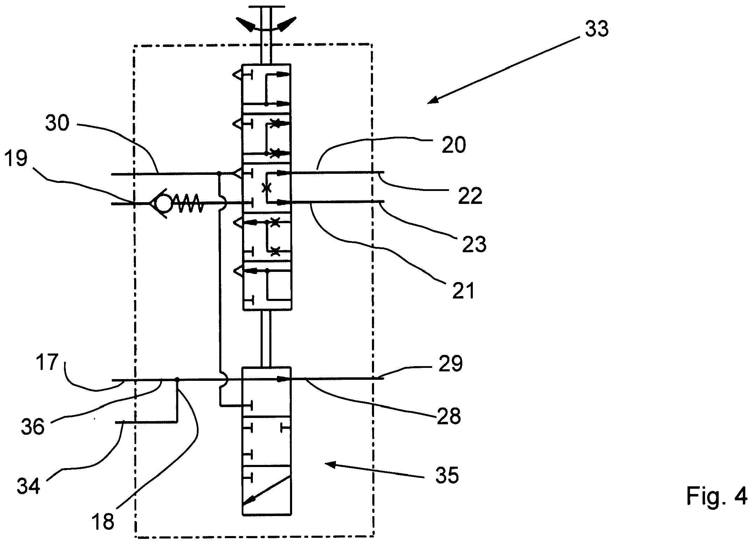

Am Anschluss 28 des Höhenbegrenzungsmoduls 35 gemäß Fig. 3 ist wie in Fig. 1 die zum Liftventil 12 führende Leitung 29 angeschlossen. In Fig. 3 zusätzlich vorgesehen ist ein weiterer Anschluss 36 am Höhenbegrenzungsmodul 35 zum Anschluss der Leitung 17. Anschlüsse 18 und 36 sind im Inneren des Höhenbegrenzungsmoduls 35 direkt miteinander verbunden, so dass in der Leitung 17 stets annähernd der gleiche Druck anliegt wie in Leitung 34. Anschluss 28 ist nur entsprechend der Funktion des Höhenbegrenzungsmoduls 35 mit dem Anschluss 18 verbunden. Das Höhenbegrenzungsmodul 35 ist in beiden Fällen (Fig. 1 und Fig. 3) als 3/2-Wegeventil ausgebildet. Bei Bewegung des Ventilkörpers im Luftfederventil 33 (bzw. 10), ausgehend von der Position gemäß den Fig. 2 und 4, schließt das Höhenbegrenzungsmodul 35, 11 zunächst und geht bei weiterer Bewegung in eine Entlüftungsfunktion über.

Das erfindungsgemäße Luftfederventil 33 gemäß Fig. 3 ist, abgesehen vom Höhenbegrenzungsmodul, im Verhältnis zum bekannten Luftfederventil 10 gemäß Fig. 1 nahezu unverändert geblieben. Verändert wurden nur das Höhenbegrenzungsmodul 35 und die Leitungsführungen. Außerdem ist das T-Stück 14 am Luftfederventil 33 gemäß Fig. 3 nicht vorgesehen. Montage und/oder Einbau des Luftfederventils 33 sind einfacher, da kein T-Stück mehr verbunden werden muss. Der zusätzliche Anschluss am Höhenbegrenzungsmodul 35 erhöht die Produktionskosten im Verhältnis zum Höhenbegrenzungsmodul 11 nur gering. Die Kosten für die Herstellung und Montage des T-Stücks entfallen aber.

## Patentansprüche

1. Luftfederventil (33) für die gesteuerte Zufuhr von Druckluft zu Luftfedern, mit einem Ventilgehäuse (13), einem Anschluss (19) zum Eintritt der Druckluft, einem mit dem Ventilgehäuse (13) verbundenen Höhenbegrenzungsmodul (35) und mit Anschlüssen (18, 28) am Höhenbegrenzungsmodul (35) zum Eintritt der Druckluft ins Höhenbegrenzungsmodul (35) und zum Austritt der Druckluft, mit einem weiteren Anschluss (36) am Höhenbegrenzungsmodul (35), **dadurch gekennzeichnet, dass** der weitere Anschluss (36) am Höhenbegrenzungsmodul (35) unmittelbar verbunden ist mit dem Anschluss (18) am Höhenbegrenzungsmodul (35) zum Eintritt der Druckluft.

2. Luftfederventil nach Anspruch 1, **dadurch gekennzeichnet, dass** der weitere Anschluss (36) am Höhenbegrenzungsmodul (35) über eine Leitung (17) mit dem Anschluss (19) am Ventilgehäuse (13) zum Eintritt der Druckluft verbunden ist.

3. Luftfederventil nach Anspruch 1 oder einem der weiteren Ansprüche, **dadurch gekennzeichnet, dass** der Anschluss (18) am Höhenbegrenzungsmodul (35) zum Eintritt der Druckluft an eine zu einem Druckluft-Vorrat (16) führende Leitung (34) anschließbar ist.

4. Pneumatisches Federungssystem mit mindestens einem Luftfederventil (33) nach Anspruch 1 oder einem der weiteren Ansprüche.

5. Fahrzeug mit einem pneumatischen Federungssystem nach Anspruch 4.

## Claims

1. Air suspension valve (33) for the controlled feed of compressed air to air springs, having a valve housing (13), a connector (19) for the inlet of the compressed air, a height limiting module (35) which is connected to the valve housing (13), and having connectors (18, 28) on the height limiting module (35) for the inlet of the compressed air into the height limiting module (35) and for the outlet of the compressed air, having a further connector (36) on the height limiting module (35), **characterized in that** the further connector (36) on the height limiting module (35) is connected directly to the connector (18) on the height limiting module (35) for the inlet of the compressed air.

2. Air suspension valve according to Claim 1, **characterized in that** the further connector (36) on the height limiting module (35) is connected via a line (17) to the connector (19) on the valve housing (13) for the inlet of the compressed air.

3. Air suspension valve according to Claim 1 or one of the further claims, **characterized in that** the connector (18) on the height limiting module (35) for the inlet of compressed air can be connected to a line (34) which leads to a compressed air supply (16).

4. Pneumatic suspension system having at least one air suspension valve (33) according to Claim 1 or one of the further claims.

5. Vehicle having a pneumatic suspension system according to Claim 4.

## Revendications

1. Valve de nivellement (33) pour l'alimentation commandée d'air comprimé aux suspensions pneumatiques, comprenant un boîtier de valve (13), un raccord (19) pour l'entrée d'air comprimé, un module de limitation de hauteur (35) raccordé au boîtier de valve (13) et des raccords (18, 28) au niveau du module de limitation de hauteur (35) pour l'entrée d'air comprimé dans le module de limitation de hauteur (35) et pour la sortie d'air comprimé, avec un raccord supplémentaire (36) au niveau du module de limitation de hauteur (35), **caractérisée en ce que** le raccord supplémentaire (36) au niveau du module de limitation de hauteur (35) est connecté directement au raccord (18) au niveau du module de limitation de hauteur (35) pour l'entrée d'air comprimé.

2. Valve de nivellement selon la revendication 1, **caractérisée en ce que** le raccord supplémentaire (36) au niveau du module de limitation de hauteur (35) est connecté par le biais d'une conduite (17) au raccord (19) au niveau du boîtier de valve (13) pour l'entrée d'air comprimé.

3. Valve de nivellement selon la revendication 1 ou selon l'une quelconque des autres revendications, **caractérisée en ce que** le raccord (18) au niveau du module de limitation de hauteur (35) pour l'entrée d'air comprimé peut être raccordé à une conduite (34) conduisant à un réservoir d'air comprimé (16).

4. Système de suspension pneumatique comprenant au moins une valve de nivellement (33) selon la revendication 1 ou selon l'une quelconque des autres revendications.

5. Véhicule comprenant un système de suspension pneumatique selon la revendication 4.
